**Europäisches Patentamt**

**European Patent Office**

**Office européen des brevets**

(19)

(11) Veröffentlichungsnummer: **0 011 157**
**B1**

(12) **EUROPÄISCHE PATENTSCHRIFT**

(45) Veröffentlichungstag der Patentschrift: **24.08.83**

(51) Int. Cl.³: **B 29 D 27/00**

(21) Anmeldenummer: **79104088.4**

(22) Anmeldetag: **22.10.79**

(54) Vorrichtung zur Fertigung von Formteilen aus Schaumkunststoffen.

(30) Priorität: **02.11.78 DE 2847557**

(43) Veröffentlichungstag der Anmeldung:
**28.05.80 Patentblatt 80/11**

(45) Bekanntmachung des Hinweises auf die Patenterteilung:
**24.08.83 Patentblatt 83/34**

(84) Benannte Vertragsstaaten:
**AT BE CH FR GB IT LU NL SE**

(56) Entgegenhaltungen:
**DE - A - 1 922 261**
**DE - A - 2 613 768**
**DE - A - 2 622 903**

(73) Patentinhaber: **Firma E.A. Heitz**
**Asselheimerstrasse 11**
**D-6718 Grünstadt (DE)**

(72) Erfinder: **Heitz, Dieter**
**Gassenweg 7**
**D-6719 Obrigheim 4 (DE)**

(74) Vertreter: **Ratzel, Gerhard, Dr. et al,**
**Seckenheimer Strasse 36a**
**D-6800 Mannheim 1 (DE)**

Courier Press, Leamington Spa, England.

## Vorrichtung zur fertigung von formteilen aus schaumkunststoffen

Die vorliegende Erfindung betrifft eine Vorrichtung zur Fertigung von beliebig gestalteten Formteilen aus Schaumkunststoffen, vorzugsweise expandierbarem Polystyrol, bei der die Formgebung in zwei voneinander getrennten jeweils eine Matrize, einen Kern und eine Haube aufweisenden Formkavitäten erfolgt, von denen die eine ständig heiß und die andere ständig kalt gehalten wird, dergestalt, daß in die heiße Formkavität Schaumkunststoffkügelchen gefüllt und diese durch Zuführung eines Heizmediums, vorzugsweise Wasserdampf, zu einem Vorformling verbunden werden, worauf dieser noch plastische und labile Vorformling, der nicht unbedingt der gewünschten, endgültigen Form entsprechen muß, der kalten Formkavität zwecks endgültiger Formgebung und Stabilisierung übergeben wird.

Die heiße Formkavität besitzt eine Temperatur, die hinreichend oberhalb des Größenordnungsbereiches der Raumtemperatur leigt. Demgegenüber besitz die kalte Formkavität eine Temperatur, die im Größenordnungsbereich der Raumtemperatur liegt.

Solche Vorrichtungen zur Fertigung von Formteilen dienen dazu, Serien von Formteilen von beliebiger, vorbestimmter Form herzustellen. Die Vorrichtung soll kostensparend in einem Fertigungsgang von dem vorexpandierten Material ausgehend die Formteile in geordneter Weise abgeben. Die Formteile sind aus Schaumkuststoff, vorzugsweise expandierbarem Polystyrol, und dienen überwiegend als Verpackungsteile für Industrie- und Konsumgüter, sowie für Zwecke der mechanischen oder thermischen Isolation, wobei sie sich besonders durch einen guten thermischen und mechanischen Schutz der zu verpackenden oder zu isolierenden Teile bei geringem Gewicht und günstigen Preis auszeichnen.

Bisher wurden solche Formteile überwiegend in Vorrichtungen mit nur einer Formkavität gefertigt, in die die Kügelchen eingefüllt, durch Zuführung des Heizmediums aufgeheizt und die Formkügelchen zu einem Formkörper verbunden und durch Abkühlung diese Formkörper stabilisiert werden. Eine Fortentwicklung dieser Methode (siehe DE—A— 1 922 261) verwendet zwei Formkavitäten, von denen die eine stets heiß und die andere stets kühl gehalten wird. In der heißen Formkavität wird der Kunststoff aufgeschäumt und von dort als heißer Schaumstoffrohling in die gekühlte Formkavität übergeführt, wo dem Schaumstoffrohling seine endgültige Form gegeben word; gleichzeitig mit der Abkühlung findet die Stabilisierung des Schaumstoffkörpers statt.

Der Nachteil des erstgenannten Verfahrens liegt in einem sehr hohen Energieverbrauch sowie sehr langen Produktionsintervallen, wobei beides durch die abwechselnde Aufheizung und Abkühlung einer einzigen Formkavität verursacht wird. Demgegenüber hat sich aber auch das zweite Verfahren, welches durch die in der DE—A—1 922 261 beschriebenen Vorrichtung verwicklicht wird, in der Praxis nicht bewährt, denn diese Vorrichtung benutzt zwei nebeneinander angeordnete Formstationen, wobei der in einer flachen, heißen Formstation vorgefertigte, noch verformbare Rohling mittels eines Rahmens, der einen Teil der heißen Formstation bildet, in die zweite danebenliegende, kalte Formstation gebracht wird, wobei dieser Rahmen mit dem darin befindlichen Rohling zwischen beheizten Platten oder Rollen bewegt wird, um ein unkontroliertes Ausschäumen des Rohlings zu verhindern. Die Verwendung eines die Außenwände der Formstation bildenden Rahmens sowie zweier Heizplatten, die den Boden und Deckel dieser Formkavität bilden, beschränkt das Verfahren auf flache, einer Platte entsprechende Formteile. Außerdem bedingt die nebeneinanderliegende Anordnung der beiden getrennten Formstationen und die dazwischenliegende Schwenkeinheit für den Rahmen eine mehr als doppelte Maschinenbreite im Verhältnis zur nutzbaren Formfläche. Dabei muß nicht nur die heiße Formstation beheizt werden, sondern es müssen auch noch die ausgedehnten Leitplatten bzw.Leitrollen, die ohnehin nur schlecht isoliert werden könne, beheizt werden. Und infolge des breiten Maschinentisches und des damit verbundenen erheblichen Gewichtes müssen große Massenkräfte überwunden werden, wenn eine schnele Fahrbewegung im Sinne kurzer Produktionsintervalle angestrebt wird. Hinzu kommt alsweiterer Nachteil, daß die endgültige Form der heißen Schaumstoffplatte nur dadurch gegeben werden kann, daß sie stellenweise oder flächig wieder zusammengepreßt wird, daß der Schaumstoffkörper also schließlich mehr Material enthält, als notwendig ist.

Außerdem ist aus der DE—A—2 622 903 eine Vorrichtung gemäß dem Oberbegriff des Anspruchs 1 bekannt, beider ebenfalls eine heiße Formstation und eine kalte Endformstation verwendet wird. Bei dieser Vorrichtung wird in der heißen Formkavität ebenfalls ein Rohling durch Befüllen und Erhitzen gefertigt. Dieser Rohling wird anschließend aus der heißen Formkavität entnommen und kann frei expandieren, bevor er in die kalte Formkavität eingebracht wird.

Diese Vorrichtung besitzt wesentliche Nachteile insofern, als der Rohling nach der Entnahme aus der heißen Formkavität nicht nur seine Maße sondern auch seine Form verändert, was das Einbringen in die kalte Formkavität sehr erschwert und oft sogar unmöglich macht. Außerdem kühlt der Rohling nach der Entnahme aus der heißen Formkavität und vor dem Einbringen in die kalte Formkavität bereits ab und läßt sich in der kalten Formkavität nur schwer noch auf die gewünschte endgültige Formgebung stabilisieren.

Außerdem wirkt sich das Expandieren zwischen den beiden Formkavitäten äußerst ungünstig auf die Auslegung dieser Formkavitäten aus. Da der Rohling nach der Entnahme aus der heißen Formkavität seine Maße und teilweise auch seine Formgebung verändern kann, ist es erforderlich, der kalten formkavität andere Maße zu geben als der heißen Formkavität.

Die Relation der Maßdifferenz kan nicht im voraus bestimmt werden, sondern muß für den jeweiligen Einzelfall experimental ermittelt werden, was die Herstellungskosten der Formkavität wesentlich erhöht.

Aufgabe der erfindungsgemäßen Vorrichtung ist es, eine möglichst einfache Übergabe der in der heißen Formkavität schon vorgeformten Rohlinge in eine kalte Formkavität unter Vermeidung einer unkontrollierbaren Blähung und Deformation der Rohlinge zwischen den Kavitäten zu erreichen. Insbesondere sollte eine Vorrichtung geschaffen werden, die nicht nur flächige sondern auch voluminöse Schaumstoffkörper, wie Kisten, Eimer und an bestimmte Waren angepaßte Verpackungsprofilkörper herzustellen gestattet. Außerdem sollte eine automatische, funktionssichere Stapelung der gefertigten Schaumstoff-formteile erreicht werden. Zusätzlich sollten die Bewegungen der einzelnen Elemente der Vorrichtung möglichst einfach gehalten werden, und durch geringe zu bewegende Gewichte die dabei zu überwindenden Massenkräfte im Sinne schneller Produktionsintervalle möglichst klein gehalten werden.

Die erfindungsgemäße Vorrichtung hat ebenfalls zwei voneinander getrennte Formkavitäten, von denen die eine mit Schaumstoffkügelchen befüllt und durch Zuführung eines Heizmediums diese Schaumstoff-kügelchen zu einem noch plastischen, aber schon vorgeformten Formkörper verbunden werden, während die zweite Formstation nach Übergabe des Formkörpers diesen durch Abkühlung in seiner endgültigen Form stabilisiert. Während die erste Formkavität ständig heiß bleibt und durch Zuführung eines Heizmediums lediglich geringe Abstrahlungsverluste ausgeglichen werden müssen, bleibt die zweite Formkavität ständig kalt zur Stabilisierung des noch verformbaren Vorformlings. Dadurch entfallen sowohl die für die wechselweise Aufheizung und Abkühlung einer einzigen Formkavität erforderlichen Zeiträume also auch der erhebliche Energieverbrauch.

Die Lösung der gestellten Aufgabe besteht dabei darin, daß der Kern lediglich einer der beiden Formkavitäten auf der Haube und der Kern der anderen Formkavität in der Matrize angeordnet ist; dabei kann der Kern der heißen Formkavität auf der Haube der heißen Formkavität angeordnet sein, während der Kern der kalten Formkavität in der Matrize der kalten Formkavität angeordnet ist, oder der Kern der kalten Formkavität aud der Haube der kalten Formkavität angeordnet sein, während der Kern der heißen Formkavität in der Matrize der heißen Formkavität angeordnet ist. Desweiteren liegen die beiden erfindungsgemäßen Formkavitäten in einer Fluchtlinie hintereinander und sind die Hauben der Beiden Formkavitäten auf einem aus dieser Fluchtlinie herausbewegbaren Mitteltisch angeordnet, wie dies im einzelnen im Kennzeichnenden Teil des Anspruchs 1 angegeben ist.

Der in der heißen Formkavität gebildete Schaumstoffkörper läßt sich somit einfach und schnell auf direcktem Weg in die kalte Formkavität zur Stabilizierung befördern. Dazu werden die Hauben der heißen und der kalten Formkavität gleichzeitig entfernt, Dabei trägt die Haube der kalten Formkavität den stabilisierten Schaumstoffkörper aus dem vorhergegangenen Arbeitsschritt aus der Schließebene heraus. Die Hauben der Formkavitäten befinden sich vorzugsweise auf einem gemeinsamen Schiebetisch, der senkrecht zur Fluchtlinie, in der die beiden Formkavitäten liegen, angeordnet ist.

Die heiße Formkavität kann so ausgelegt sein, daß der in der Fluchtlinie bewegbare Fahrtisch der heißen Formkavität die Matrize der heißen Formkavität trägt und der Mitteltisch die Haube der heißen Formkavität mit dem Kern. Die kalte Formkavität ist dann so ausgelegt, daß die auf dem in der Fluchtlinie verschiebbaren Fahrtisch der kalten Formkavität befestigte Matrize der kalten Formkavität auch den Kern enthält, während die auf dem Mitteltisch befestigte Haube der kalten Formkavität eine mehr oder weniger glatte Platte bildet, Dadurch wird eine direkte Übergabe des heißen, noch sehr gut vorformbaren Rohlings aus der ihn umschließenden Matrize der heißen Formkavität in die ihn umschließende Matrize der kalten Formkavität ermöglicht, ohne daß der Rohling sich deformieren oder unkontrollierbar expandieren kann.

Die erfindungsgemäße Vorrichtung löst somit die Aufgabe unter Vermeidung der erwähnten Nachteile und Erlangung erheblicher Vorteile insbesondere hinsichtlich Einfachheit und Schelligkeit der Bewegungen sowie Genauigkeit der Führungen.

Die vorstehende Beschreibung wird durch folgende beispielhafte Zeichnungen erläutert:

Figur 1 zeigt die Seitenansicht einer möglichen Bauart der erfindungsgemäßen Vorrichtung;

Figur 2 zeigt die Seitenansicht einer anderen Ausführungsform der erfindungsgemäßen Vorrichtung, bei der die Temperaturen der beiden Formkavitäten gegenüber Figur 1 miteinander vertauscht sind;

Figur 3 zeigt einen Schnitt der Vorrichtung, wie sie in Figur 1 gezeichnet ist, entlang der Linie a—a';

Figur 4 zeigt eine Seitenansicht der Vorrichtung nach Figur. 1 mit Zug- und Drückvorrichtung für die gefertigten Formteile;

Fig. 5—8 zeigen die schematische Ausführung einer Verschäumform für die Fertigung von tiefen Formteilen, sowie die Bewegung eines solches Formteils aus der heißen Formkavität in die kalte Formkavität unter Vermeidung einer unkontrollierbaren Deformation des Vorformlings zwischen den beiden Formkavitäten.

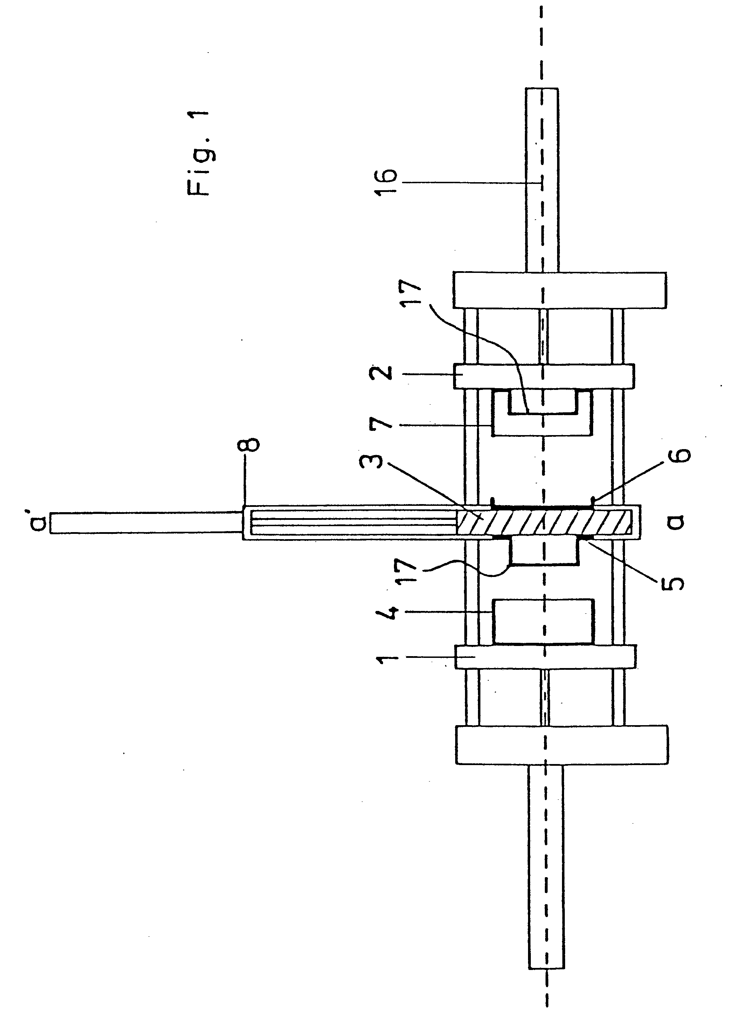

Im einzelnen wird in Figur 1 die Arbeitsweise der erfindungsgemäßen Vorrichtung anhand einer möglicher Bauart beispielhaft erläutert, wobei 1 und 2 zwei unabhängig voneinander, horizontal bewegliche Fahrtische bezeichnen, 3 einen ausfahrbaren oder ausschwenkbaren Mitteltisch, 4 die Matrize und 5 die Haube der heißen Formkavität und 7 die Matrize und 6 die Haube de kalten Formkavität bezeichnen.

Der Ablauf eines Produltionsintervalls mit der erfindungsgemäßen Vorrichtung ergibt sich demnach in folgender Reihenfolge:

Bei nach unten bewegtem Mitteltisch 3 liegen die beiden Formkavitäten hintereinander in einer Fluchtlinie 16 und werden durch die Schließbewegung der beiden Fahrtische 1 und 2 geschlossen. In die aus Matrize 4 und Haube 5 gebildete heiße Formkavität werden Schaumstoffkügelchen eingefüllt und mittels eines Heizmediums zu einem Formkörper verbunden. Anschließend werden die beiden Fahrtische 1 und 2 in Öffnungsstellung gefahren, wobei der gefertigte Vorformling in der Matrize 4 der heissen Formkavität verbleibt und dadurch rundum umschlossen ist, um ein unkontrolliertes Blähen und damit verbundene Deformationen zu vermeiden.

Anschließend fährt der Mitteltisch 3 mit der darauf befestigten Haube 5 der heißen Formkavität und der Haube 6 der kalten Formkavität aus der Schließebene der Vorrichtung heraus und erlaubt damit eine Schließbewegung des Fahrtisches 1 mit der darauf befestigten Matrize 4 der heißen Formkavität und des Fahrtisches 2 mit der darauf befestigten Matrize 7 der kalten Formkavität direkt aufeinander.

Der in der Matrize 4 der heißen Formkavität verbliebene Vorformling wird dann in die Matrize 7 der kalten Formkavität direkt übergeben, wobei an sich bekannte mechanische oder pneumatische Hilfsmittel unterstützend eingreifen können. Anschliessend öffnen die beiden Fahrtische 1, 2 sich wieder, wobei der Vorformling sich nunmehr in der Matrize 7 der kalten Formkavität befindet.

Der Mitteltisch 3 wird numehr wieder nach unten in die Schließebene der beiden Fahrtische 1 und 2 bewegt, wodurch die kompletten beiden Formkavitäten wieder in einer Ebene liegen. Durch Schliessen der beiden Fahrtische 1 und 2 werden die Matrize 4 und die Haube 5 der heißen Formkavität, sowie die Haube 6 und die Matrize 7 der kalten Formkavität wieder geschlossen, wobei der in der Matrize 7 befindliche Vorformling endgültig zum Formteil in gewünschter Ausführung stabilisiert wird, während in die heiße Formkavität, gebildet aus Matrize 4 und Haube, bereits wieder Schaumstoffkügelchen eingefüllt werden können.

Bei der erfindungsgemäßen Vorrichtung entspricht der Kern 17 in der Matrize 7 der kalten Formkavität auf dem Fahrtisch 2 der kalten Formkavität dem Kerm 17 der Haube 5 der heißen Formkavität auf dem Mitteltisch. Dieser Kern 17 kann beliebige Form besitzen. Bei der in den Figuren 1 bis 8 abgebildeten Ausführungsform der erfindungsgemäßen Vorrichtung ist der Kern 17 jeweils starr mit dem Boden 15 der kalten Formkavität bzw. der Haube 5 der heißen Formkavität verbunden.

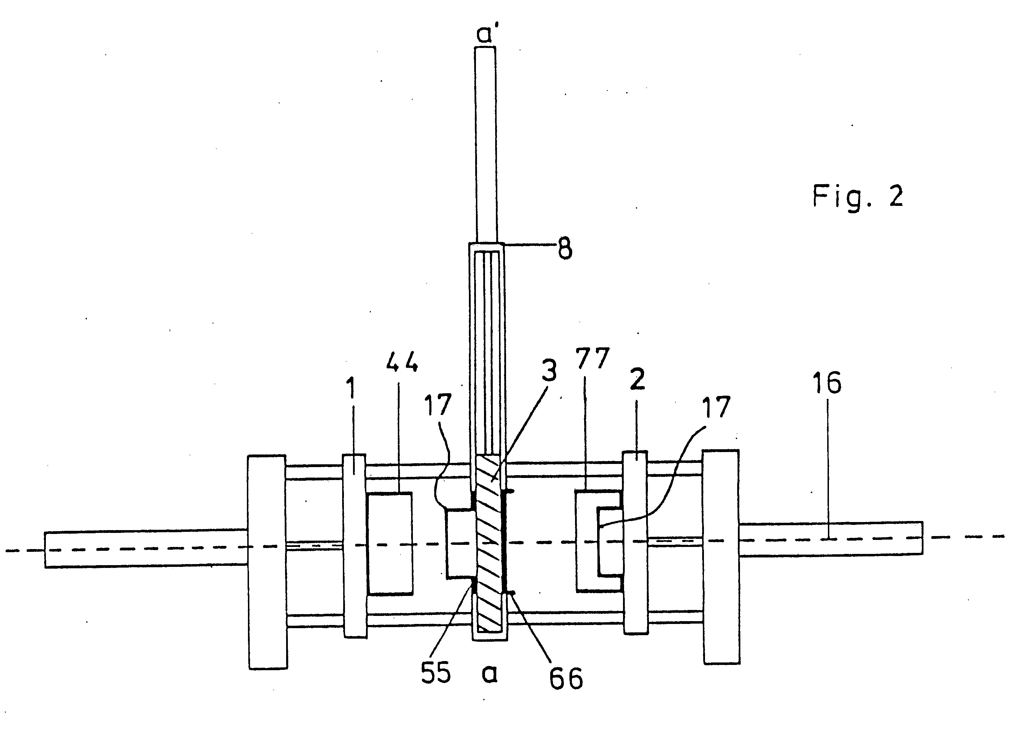

In Figur 2 ist eine ganz entsprechende Verkörperung der Erfindung dargestellt; sie unterscheidet sich von der in der Figur 1 dargestellten Abbildung dadurch, daß die Temperaturen der beiden Formkavitäten miteinander vertauscht sind. In Figur 2 ist demnach der Kern 17 der kalten Formkavität auf der Haube 55 der kalten Formkavität angeordnet. Gebildet wird hier die kalte Formkavität aus der Matrize 44 der kalten Formkavität und der Haube 55 der kalten Formkavität. Entsprechend ist der Kern 17 der heißen Formkavität in der Matrize 77 der heißen Formkavität angeordnet. Die heiße Formkavität wird von der Matrize 77 der heißen Formkavität und der Haube 66 der heißen Formkavität gebildet. Die Matrize 77 der heißen Formkavität ist auf dem Fahrtisch 2 und die Matrize 44 der kalten Formkavität auf dem Fahrtisch 1 angeordnet. Entsprechend sind die Haube 55 der kalten Formkavität und die Haube 66 der heißen Formkavität auf dem Mitteltisch 3 angeordnet. Die Funktionsweise dieser Ausführungsform ist ganz analog zu derjenigen, die in Figur 1 dargestellt und weiter oben beschrieben ist.

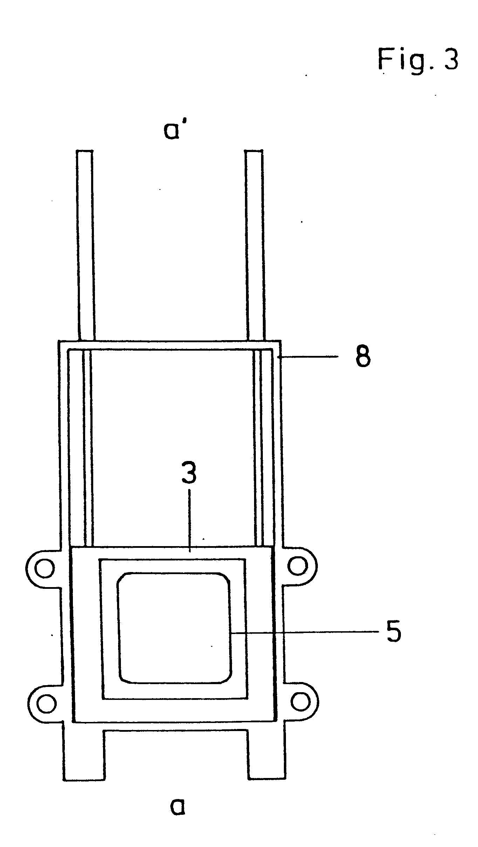

Figur 3 zeigt beispielsweise eine mögliche Bauart des Mitteltisches 3 der erfindungsgemäßen Vorrichtung nach Figur 1, wobei hier von einem feststehenden Mitteltisch der Vorrichtung ausgegangen wird. Ineinem Rahmen 8, ist der Mitteltisch 3 geführt, 5 wäre demnach bei Ansicht gemäß der Linie a—a' der Figur 1 die Haube 5 der heißen Formkavität. Selbstverständlich kann dieser Mitteltisch 3 auch so angeordnet werden, daß er seitlich herausfahrbar oder herausschwenkbar angeordnet ist. Desweiteren kann der Mitteltisch 3 auch waagrecht angeordnet sein, wenn die Fluchtlinie 16 der erfindungsgemäßen Vorrichtung senkrecht angeordnet ist; es hat sich gezeigt, daß auch dann noch die erfindungsgemäße Vorrichtung reibungslos funktioniert. Die Aufgabe des Mitteltisches 3 bei de erfindungsgemäßen Vorrichtung muß es jedoch immer sein, das direkte Gegeneinanderfahren der beiden Fahrtische 1 und 2 und die dadurch erfolgende direkte und kontrollierbare Übergabe des Vorformlings aus der Matrize 4 der heißen Formkavität in die Matrize 7 der kalten Formkavität zu ermöglichen.

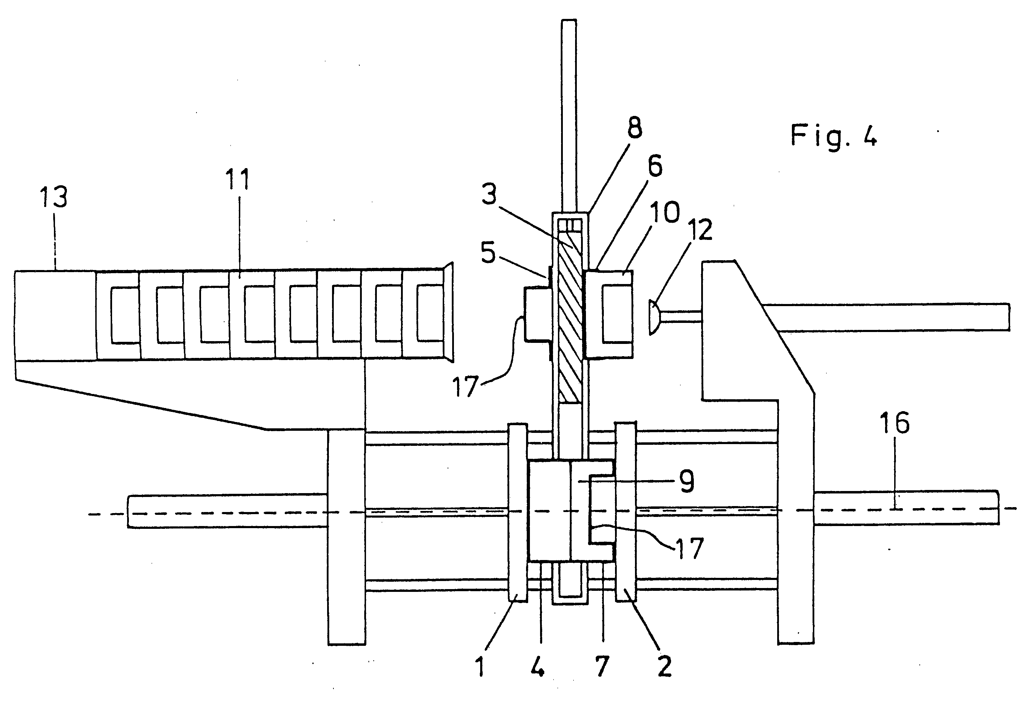

Figur 4 zeigt beispielsweise eine mögliche zusätzliche Ausstattung der erfindungsgemäßen Vorrichtung nach Figur 1, u, eine vollautomatische Entnahme und anschließende Stapelung der gefertigten Formteile 11 zu ermöglichen. Bezeichnet sind mit 9 ein gerade aus der Matrize 4 der heißen Formkavität in die Matrize 7 der kalten Formkavität übergebener Vorformling und mit 10 ein in der aus der Haube 6 und der Matrize 7 gebildeten kalten Formkavität stabilisiertes Formteil, das bei Öffnung der beiden Fahrtische 1 und 2 aus der Matrize 7 auf die Haube 6 der kalten Formkavität im vorhergegangenen Fertigungsschritt übergeben und bei Ausfahren des Mitteltisches 3 aus der Schließebene mit herausgenommen wurde. Hierbei wird der Zeitraum für die Entnahme des Stabilisierten Formteiles 10 vom Mitteltisch 3 benutzt, für den der Mitteltisch ohnehin in ausgefahrener Stellung verharren muß, um zwischenzeitlich eine Übergabe des inzwischen gefertigten Vorformlings 9 aus der Matrize 4 der heißen Formkavität in die Matrize 7 der kalten Formkavität zu ermöglichen. Dadurch entsteht kein ansonsten üblicher erheblicher Zeitverlust für Entformung oder Entnahme der gefertigten Formteile.

Gleichzeitig dient eine Zug- und Drückvorrichtung 12 bei später wieder in die Schließebene eingefahrenem Mitteltisch 3 der Stapelung der Formteile durch einfache Vorwärtsbewegung durch den vom Mitteltisch 3 freigemachten Raum und das dadurch erfolgende Eindrüken in eine seitlich die Formteile 11 klemmende Stapelvorrichtung 13.

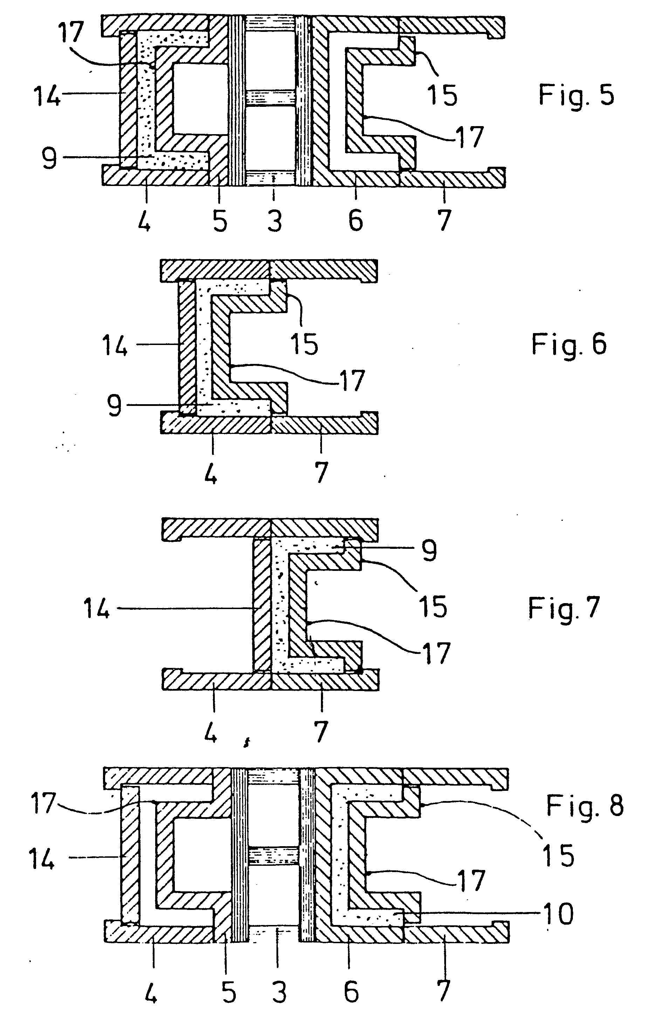

Die Figuren 5—8 zeigen eine mögliche Ausführungsform der beiden Formkavitäten. Auf den ausfahrbaren oder ausschwenkbaren Mitteltisch 3 sind die Haube 5 der heißen Formkavität und die Haube 6 der kalten Formkavität befestigt sind. Zur Übergabe des Vorformlings 9 aus der Matrize 4 der heißen Formkavität in die Matrize 7 der kalten Formkavität sind diese Matrizen mit bewegbaren oder verschiebbaren Böden 14, 15 ausgerüstet. Die Figuren 5—8 zeigen einen Vorformling 9 auf seinem Weg von der heißen Formkavität in die kalte Formkavität bis zum stabilisierten Formteil 10. Daß sich in Figur 5 noch ein stabilisiertes Formteil in der aus haube 6 und Boden 15 gebildeten kalten Formkavität befinden kann, und in Figur 8 bereits wieder ein Vorformling in der aus Boden 14, Matrize 4 und Haube 5 gebildeten heißen Formkavität gefertigt werden kann, wurde dabei nicht berücksichtigt. Die erfindungsgemäße Vorrichtung nach Figur 1 befindet sich in den Figuren 5 und 8 in Schließstellung mit in die Schließebene eingefahrenem Mitteltisch 3, in den Figuren 6 und 7 in Schließstellung mit aus der Schließebene gefahrenem Mitteltisch 3. Wie aus Figur 6 ersichtlich, wird der in der heißen formkavität gefertigte Vorformling 9 beim Schließeb der Vorrichtung mit ausgefahrenem Mitteltisch 3 von einer aus der Matrize 4 mit Boden 14 der heißen Formkavität und dem Boden 15 der kalten Formkavität gebildeten Formkavität umschlossen. Bei paralleler Bewegung oder Verschiebung der Böden 14, 15 beider Formkavitäten wird der Vorformling 9 aus der heißen Formkavität in die kalte Formkavität übergeben unter vollkommener Kontrolle und unter Ausschuß eines unkontrollierbaren Blähens und damit verbundener Deformation. Formwerkzeuge nach dieser beispielhaft beschiebenen Ausführung im Einsatz auf der erfindungsgemäßen Vorrichtung ermöglichen auch die Fertigung tieferer Formteile wie Schachteln und Kisten.

Entsprechend konnen die Formkavitäten bei einer Ausführungsform der Erfindung gemäß Figur 2 ausgebildet sein. Hierbei sind zum Verständnis der Figuren 5—8 lediglich folgende Ergänzungen vorzunehmen:

Die Matrize 4 der heißen Formkavität wird zur Matrize 44 der kalten Formkavität;
die Haube 5 der heißen Formkavität wird zu der Haube 55 der kalten Formkavität;
die Haube 6 der kalten Formkavität wird zu der Haube 66 der heißen Formkavität und
die Matrize 7 der kalten Formkavität wird zu der Matrize 77 der heißen Formkavität.

Die oben beschriebene, erfindungsgemäße Vorrichtung erlaubt die Fertigung von Schaumstofformteilen in äußerst kurzen Produktionsintervallen bei äußerst geringem Energieverbrauch.

Bei Vergleich einer Fertigung von Radioverpackungen · in · den · Abmessungen 340×235×148 mm (Länge×Breite×Tiefe) sowie einer maximalen Wanddicke von ca. 45 mm ergaben sich erhebliche Vorteile zu den heute üblichen Produktionsvorrichtungen mit nur einer einzelnen Formkavität, die abwechselnd aufgeheizt und abgekühlt werden muß.

So betragen die Produktionsintervalle bei den heute üblichen Vorrichtungen ca. 140 bis 150 Sekunden, der Dampfverbrauch je Formteil ·ca. 7,3 kg (Sattdampt 2,5 bar). Die Produktionsintervalle bei der erfindungsgemäßen Vorrichtung betragen höchstens 42 Sekunden, der Dampfverbrauch je Formteil ca. 0,92 kg.

Die in der Praxis sich ergebenden Vorteile bei der Fertigung mit der erfindungsgemäßen Vorrichtung sind offensichtlich.

Bei Ausrüstungen der erfingungsgemäßen Vorrichtung mit einer solchen beispielhaft gezeigten Entnahme-und Stapelvorrichtung (siehe Fig. 4) werden die Formteile nicht nur rationell gefertigt, sondern auch ohne jegliche Verzögerung der Produktionsintervalle automatisch entnommen und verpackungsbereit gestapelt. Schaumstofformteile, wie sie mit der erfindungsgemäßen Vorrichtung gefertigt werden, wurden bisher überwiegend lediglich aus einer Formhälfte ausgeworfen und mußten von Hand aufgenommen und gestapelt werden. Die hierbei entstehenden Kosten können bis zu 40% der gesammten Fertigungskosten betragen und entfallen nun bei Benutzung der erfindungsgemäßen Vorrichtung ebenso wie die sonst übliche Verlängerung des Produktionsintervalles.

## Patentansprüche

1. Vorrichtung zur Fertigung von beliebig gestalteten Formteilen aus Schaumkunststoff, vorzugsweise expandierbarem Polystyrol, bei der die Formgebung in zwei voneinander getrennten jeweils eine Matrize (4,7 bzw. 44,77), einen Kern (17) und eine Haube (5,6 bzw. 55,66) aufweisenden Formkavitäten erfolgt, von denen die eine ständig heiß und die andere ständig kalt gehalten wird, dergestalt, daß in die heiße Formkavität Schaumstoffkügelchen gefüllt und diese durch Zuführung eines Heizmediums, vorzugsweise Wasserdampf, zu einem Vorformling verbunden werden, worauf dieser Vorformling der kalten Formkavität zwecks endgültiger Formgebung und Stabilisierung übergeben wird, dadurch gekennzeichnet, daß der Kern (17) lediglich einer der beiden Formkavitäten auf der Haube (5 bzw. 55) und der Kern (17) der anderen Formkavität in der Matrize (7 bzw. 77) angeordnet ist und daß die heiße und die kalte Formkavität in einer Fluchtlinie (16) in Reihe angeordnet sind, wobei die Matrize (4 bzw. 77) der heißen Formkavität und die Matrize (7 bzw. 44) der kalten Formkavität auf je einem in der Fluchtlinie (16) bewegbaren Fahrtisch (1,2) angeordnet und die Haube (5 bzw. 66) der heißen Formkavität und die Haube (6 bzw. 55) der kalten Formkavität gemeinam auf einem aus der gennanten Fluchtlinie (16) herausbewegbaren Mitteltisch (3) angeordnet sind und der in der Matrize der heißen Formkavität befindliche Vorformling (9) direkt in die Matrixe der kalten Formkavität bei aus der Fluchtlinie (16) herausbewegtem Mitteltisch (3) übergebbar ist.

2. Vorrichtung nach Anspruch 1, dadurch gekennzeichnet, daß eine Zug- und Drückvorrichtung (12) senkrecht zur Ebene des Mitteltisches (3) gegenüber de Lage des ausgefahrenen Mitteltisches auf der Seite der kalten Formkavität angeordnet und verschiebbar ist und entsprechend auf der Seite der heißen Formkavität eine Stapelvorrichtung (13) angeordnet ist.

3. Vorrichtung nach Anspruch 1, und/oder 2, dadurch gekennzeichnet, daß die beiden Matrizen (4,7 bzw. 44,77) jeweils einen Boden (14,15) besitzen, der in jeder Matrize in der Fluchtlinie (16), in der die beiden Formkavitäten liegen, verschiebbar ist.

## Claims

1. Apparatus for the production of moulded parts of any shape desired from foamed plastics material, preferably expandable polystyrene, in which the shaping takes place in two mould cavities separated from one another and each have a die (4,7 or 44,77), a core (17) and a hood (5,6 or 55,66), one of which mould cavities is kept permanently hot and the other one of which is kept permanently cold in such a way that the hot mould cavity is filled with foam pellets and these latter, by feeding in a heating medium, preferably steam, are bound to form a preform, whereupon this preform is transferred to the cold mould cavity for the purpose of final shaping and stabilisation, characterised in that the core (17) of only one of the two mould cavities is arranged on the hood (5 or 55) and the core (17) of the other mould cavity is arranged in the die (7 or 77), and in that the hot and cold mould cavities are arranged in series in a straight line (16), the die (4 or 77) of the hot mould cavity and the die (7 or 44) of the cold mould cavity being arranged on a respective travelling table (1,2) movable on the straight line (16), and the hood (5 or 66) of the hot mould cavity and the hood (6 or 55) of the cold mould cavity being arranged together on an intermediate table (3) movable out of said straight line (16), and the preform (9) situated in the die of the hot mould cavity can be transferred directly into the die of the cold mould cavity when the intermediate table (3) is moved out of the straight line (16).

2. Apparatus according to Claim 1, characterised in that a tensioning and compressing device (12) is arranged and is displaceable perpendicularly to the plane of the intermediate table (3) in respect of the position of the moved-out intermediate table on the side of the cold mould cavity, and a stacking device (13) is arranged correspondingly on the side of the hot mould cavity.

3. Apparatus according to Claims 1 and/or 2, characterised in that the two dies (4,7 and 44,77) respectively have a bottom (14,15) which in each die is displaceable on the straight line (16) on which the two mould cavities lie.

## Revendications

1. Installation pour la réalisation d'éléments de moulage ayant une forme quelconque en mousse artificielle, de préférence en polystyrène expansé, laquelle le moulage s'effectue dans deux cavités de moulage séparées l'une de l'autre et présentant chacune une matrice (4,7, 44,77), un noyau (17) et un capot (5,6, 55,66), l'une étant maintenue chaude en permanence et l'autre froide en permanence, de telle sorte qu'on remplit la cavité de moulage chaude avec des petites billes de mousse et que celles-ci sont liées en un pré-moulage par l'apport d'un agent de chauffage, de préférence de la vapeur d'eau, ce pré-moulage étant transféré à la cavité de moulage froide pour le moulage et la stabilisation définitifs, caractérisée en ce que le noyau (17) d'une des deux cavités de moulage est monté su le capot (5,55) et le noyau (17) de l'autre cavité de moulage dans la matrice (7,77) et en ce que la cavité chaude et la cavité froide sont disposées en série et en alignement (16), la matrice (4,77) de la cavité de moulage chaude et la matrice (7,44) de la cavité de moulage froide étant respectivement disposées sur une table de transport (1,2) mobile selon l'alignement (16) et la capot (5,66) de la cavité de moulage chaude et le capot (6,55) de la cavité de moulage froide étant disposées ensemble sur une table intermédiaire (3) mobile hors de l'alignement (16), et le pré-moulage (9) se trouvant dans la matrice de la cavité chaude étant directement transférable dans la matrice de la cavité de moulage froide grâce à la table intermédiaire (3) déplacée hors de l'alignement (16).

2. Installation selon la revendication 1, caracterisée en ce qu'une intallation de traction et de pression (12) est disposée perpendiculairement au plan de la table intermédiaire (3) en face de la position de la table intermédiaire déplacée sur le côté de la cavité de moulage froide et est coulissante, en ce que, de façon correspondante, une installation d'empilage (13) est disposée sur le côte de la cavité de moulage chaude.

3. Installation selon la revendication 1 et/ou la revendication 2, caractérisée en ce que les, deux matrices (4,7, 44,77) possèdent chacune un fond (14,15) qui est mobile dans chaque matrice selon l'alignement (16) dans lequel se trouvent les deux cavités de moulage.

Fig. 1

Fig. 2

Fig. 3

Fig. 4

0011 157

**0011 157**

Fig. 5

Fig. 6

Fig. 7

Fig. 8

5